(19) Europäisches Patentamt
European Patent Office
Office européen des brevets

(11) **EP 2 860 894 A1**

(12) **EUROPEAN PATENT APPLICATION**

(43) Date of publication:
**15.04.2015 Bulletin 2015/16**

(51) Int Cl.:
*H04L 1/00* (2006.01)     *H04L 5/00* (2006.01)

(21) Application number: **13290241.2**

(22) Date of filing: **08.10.2013**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **ALCATEL LUCENT**
**92100 Boulogne-Billancourt (FR)**

(72) Inventors:
• **Timmers, Michael**
  **2018 Antwerpen (BE)**
• **Maes, Jochen**
  **2018 Antwerpen (BE)**

(74) Representative: **Plas, Axel Ivo Michel**
**IP HILLS NV**
**Hubert Frère-Orbanlaan 329**
**9000 Gent (BE)**

(54) **Method and device for compressing and decompressing frequency domain samples**

(57)     A method and corresponding devices are disclosed for compression of N-bit frequency domain samples. The sample represents a single frequency tone of a time domain symbol. The time domain symbol is to be sent or sent over a transport link (224) from a first transceiver network component (220, 223) to a second transceiver network component (220, 223). The N-bit frequency domain sample further represents $K_f$ bits of binary payload data as a constellation point of a constellation diagram. The method comprises several steps. First, a reference bitloading profile (401, 312) is obtained comprising a maximum number of bits $L_f$ that may be loaded onto the single frequency tone. Then, a quantized number of bits $M_f$ greater than or equal to $L_f$ is chosen (311). Finally, the N-bit frequency domain sample is quantized to an $M_f$-bit frequency domain sample according to the quantized number of bits $M_f$.

Fig. 2

**Description**

**Field of the Invention**

The present invention generally relates to access networks and network function virtualization (NFV) used in such networks where signal processing functionality is performed centrally in a Higher Order Node (HON) such as a Central Office (CO) or, more generally, a Central Processing Unit (CPU) in order to offload a downstream transceiver or Lower Order Node (LON) such as a Distribution Point (DP) or, more generally, a Distributed Processing Unit (DPU). More particularly, the invention relates to techniques to compress the data between the HON and the LON.

**Background of the Invention**

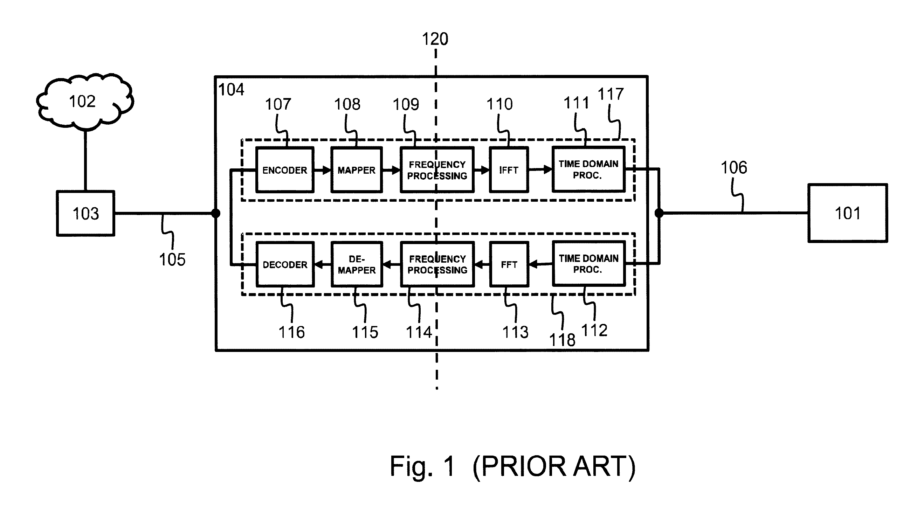

A typical access network that connects an end user node 101 to a data network 102 is depicted in Fig. 1. A network provider is connected to a data network 102, such as the internet at a central location referred to as the Central Office (CO) 103. In the CO a large amount of computation power is available. To exchange data between the data network and an end user node, the CO, sometimes referred to as a Higher Order Node (HON), is connected to a Lower Order Node (LON) in the form of a Distribution Unit (DU) or, more generally, a Distributed Processing Unit (DPU) 104. This connection between the CO and DPU is typically a high bandwidth link such as a fibre link further referred to as backbone transport link, uplink or backhaul 105. The DPU is then connected to several end user nodes over a transport link or downlink 106. Typical examples of transport links are twisted pairs or telephone lines connecting end user nodes with a DPU located in a cabinet on the street. Using DSL technology such as ADSL, VDSL or the upcoming G.fast, the data from and to the data network is then modulated onto signals running over these twisted pairs. For this purpose, the DPU comprises a downlink signal processing chain 117 for modulation of data onto a signal sent over the end node transport link 106 to the end user node. Similarly, the DPU also comprises an uplink signal processing chain 118 for demodulation of data from a data signal received from the end user node in the DPU.

To achieve higher data throughputs between the DPU and the end user, the DPU's are placed closer and closer to the end user, resulting in more needed DPU's that can be connected to less end user nodes at once. To keep the cost of the DPU and the power consumption in the DPU as low as possible the aim is to keep also the computational complexity of the DPU as low as possible.

One known way to achieve this, is to perform the en- and de-coding 107/116, (de)mapping 108/115 and part of the frequency domain processing 109/114 in the Central Office instead of in the DPU. The intermediate processed data is then exchanged between the CO and the DPU. In Fig.1 this functional split is denoted by line 120.

The disadvantage of this split 120, is that the amount of data exchanged between the CO and DPU increases. For the example of a G.fast end node transport link 106, the maximum data throughput before the encoder 107 is around 500 Megabits per second (Mbps) whereas the data throughput at the split 120, is around 2.3 Gigabits per second (Gbps). Therefore, when offloading the DPU by the split 120, the data throughput capacity of the backhaul 105 has to be dimensioned much higher resulting in less DPUs that can be served by a single backhaul 105.

**Summary of the Invention**

It is an object of the present invention to overcome the above disadvantage. This is achieved by, in a first aspect, a method compressing an N-bit frequency domain sample assigned to a single frequency tone in a frequency domain representation of a time domain symbol. The time domain symbol is to be sent or sent over a transport link from a first transceiver network component to a second transceiver network component. The N-bit frequency domain sample further represents $K_f$ bits of binary payload data as a constellation point of a constellation diagram. The method comprises the following steps:

- obtaining a reference bitloading profile comprising a maximum number of bits $L_f$ that may be loaded onto this single frequency tone,
- choosing a quantized number of bits $M_f$ greater than or equal to $L_f$,
- quantizing the N-bit frequency domain sample to an $M_f$-bit frequency domain sample according to the quantized number of bits $M_f$.

The number of bits N, $K_f$, $L_f$ and $M_f$ are positive integer numbers and N is greater or equal to $M_f$.

The time domain symbol is thus the result of a Discrete Multi-Tone (DMT) modulation (DMT) where each tone or subcarrier in the frequency domain representation of the time domain symbol has $K_f$ bits of binary data modulated on it. $K_f$ may thus be different for each tone as is typically the case in DSL applications and thus DSL signal processing chains. The loading of the $K_f$ bits on each tone may be done during a mapping stage where the amount of bits $K_f$ is chosen based on a bitloading profile specifying the actual amount of bits that is to be loaded on each tone taking into account the characteristics of the transport link.

The compressing may be used in an uplink scenario where the time domain symbol is received by the second transceiver network component from the first transceiver network component. This second component may be a Distributed Processing Unit (DPU) and the first component may be an end user node connected to each other by the transport link, for example a twisted pair line. After some time domain processing the second component may then convert the time domain symbol to the N-bit frequency domain samples and may perform further frequency domain processing. These N-bit samples may have the same number of bits N for all $N_f$ tones of the time domain symbol. Before transferring the N-bit frequency domain sample to a Higher Order Node (HON) the DPU may then compress the sample to an $M_f$-bit sample in order to limit the data throughput needed between the HON and DPU. As the reference bitloading profile takes into account the actual tone, the amount of bits $M_f$ may be different for each subcarrier frequency and thus for each tone. In the HON, the frequency domain samples may then be further demodulated in order to obtain the binary payload data embedded within the time domain symbol.

The number of bits N may also be frequency dependent, thus different for every tone, and be related to the $K_f$ bits of payload data and thus to the number of bits representing the constellation point in the constellation diagram.

The compressing may also be used in a downlink scenario where binary payload data is modulated onto an N-bit frequency domain sample in for example a HON or, more generally, a CPU. The HON then compresses the N-bit sample to an $M_f$-bit sample and sends the sample to the first transceiver component, for example a DPU, over a backhaul. The DPU then decompresses the sample into the original sample or at least an approximation of the original sample. The DPU then further processes the frequency domain samples, converts them into a time domain symbol and transmits the symbol over the transport link to a second transceiver component, for example over a twisted pair line to an end user node.

The N-bit frequency sample may be represented by an In-phase (I) and Quadrature (Q) component. In typical DSL applications for example, each tone or carrier is represented by a 6-bit I- and 6-bit Q-component making N thus 12 bits just before performing the Inverse Fourier Transform. The method according to the invention allows to compress these frequency samples without losing accuracy, i.e. allowing a lossless compression but with a potentially reduced capacity depending on the chosen reference profile.

Such a bitloading profile may for example be represented by a graph specifying the amount of bits per Hz bandwidth per second (bits/Hz/s).

It is an advantage that the compression takes into account the characterization of the channel, i.e. the transport link between the first and second transceiver component, making the compression tone dependent. As such, a tone that cannot carry a lot of payload data, for example because it has a higher carrier frequency, will have a higher compression ratio. Reversely put, a tone with a lot of payload data modulated on it, will be compressed less avoiding a loss of payload data due to the compression.

It is a further advantage that a reference bitloading profile is used that specifies a maximum number of bits $L_f$ and not necessarily the actual number of bits Kf as this may vary as a function of time depending on the varying channel characteristics. This way the compression is made static, i.e. not varying for every set of samples that is compressed. In other words, it is known in advance what the sample throughput will be after compression. This further allows dimensioning a backhaul according to this sample throughput and not to the throughput needed to send the N-bit samples.

Advantageously, the quantizing step of the above method is only performed if $L_f$ is greater or equal than $K_f$ as otherwise the compression would result in a loss of payload data. Alternatively, the amount of payload bits $K_f$ loaded onto the tone by a mapping operation will also take into account the bitloading profile. Therefore, in this case, $L_f$ is inherently greater or equal to $K_f$.

According to a preferred embodiment the single frequency tone is part of a set of $N_f$ tones in the frequency domain representation of the time domain symbol. The bitloading profile is then a reference bitloading profile indicative for a maximum number of bits that can be loaded on each tone of the set of $N_f$ tones when the time domain symbol is sent over a predetermined reference transport link.

The bitloading profile is thus based on a reference transport link and not the actual transport link. The profile will thus not change if the actual transport link is better or worse than the reference transport link. When the actual transport link is worse, less compression than possible will be performed. When the actual transport link is better than the reference link, less bits will be loaded on the tones than actually possible as the mapping will also take into account the bitloading profile as the upper limit for mapping binary payload data onto the subcarrier.

This has the advantage that the total amount of bits after compression will always be the same regardless of the condition of the transport link. This allows, for example, dimensioning the backhaul between a HON and a LON over which the compressed samples would be transmitted according to this reference bitloading profile which may be lower than the theoretical throughput of some of the transport links.

According to the preferred embodiment, the obtaining the bitloading profile comprises reordering the set of $N_f$ tones thereby assigning the N-bit frequency domain sample to an updated single frequency tone from the set of $N_f$ tones.

This tone reordering is performed to compensate for a change in the maximum number of bits that can be loaded onto the single frequency tone by using the transport link instead of the predetermined reference transport link. The method then further comprises selecting the maximum number of bits $L_f$ from the reference bitloading profile for the updated single frequency tone. This change may for example be caused by a stub that is placed somewhere on the transport link as this affects the bitloading profile of the transport link without changing the actual throughput capacity of the transport link itself.

Thus, in other words, as payload data or N-bit frequency domain samples are assigned to the different tones, by performing the reordering the samples are mapped onto a reordered set of tones. This reordering does not necessarily affect all the tones. Some tones may still have the same sample assigned after the reordering while other samples may be assigned or mapped onto other tones. As the tones are reordered, different samples from different tones before the reordering cannot be assigned to the same tone after the reordering. The reordering is thus a bijection or one-to-one operation and no samples are lost by performing the reordering.

This allows to take into account changes in the transport link that do not affect the total amount of bits that can be loaded on all tones but reorders the distribution of maximum bits per tone over all tones. The N-bit frequency domain samples are thus assigned to other subcarrier frequencies and thus other tones during the reordering. For example, when the transport link is a twisted pair copper line, the reference bitloading profile and thus the maximum number of bits that may be loaded on each tone may be decreasing towards higher subcarrier frequencies. However, when a stub is added somewhere along the copper line, the actual bitloading profile of the transport link may first decrease towards the middle frequencies and then increase again towards higher frequencies.

According to the preferred embodiment, the step of choosing the quantized number of bits Mf then comprises adding a quantization margin V representing an extra number of bits V such that the sum of Lf and V equals M. The quantization margin V is chosen such that quantization noise introduced by the quantizing is below overall system noise introduced on the frequency domain sample or time domain symbol.

As the N-bit sample is a frequency domain representation of a time domain symbol, quantizing the N bits will lead to a decrease in the signal to noise ratio. Depending on the processing performed in the frequency domain on the N-bit sample, such as for example a transformation of the constellation diagram or a vector processing operation, more bits may be needed to represent the sample without a substantial decrease in the signal to noise ratio. Advantageously, the margin V is a fixed number of bits for each tone allowing an easy implementation in the signal processing chain. Preferably, V may be 1 or 2 bits as taking more bits would not lead to a further substantial gain in Signal to Noise Ratio for xDSL applications. In other words, by adding 1 or 2 bits, the quantization noise would not be bigger than the overall system noise, i.e. noise introduced by the transport link, the frequency domain processing and time domain processing.

In a second aspect the invention also relates to a method for decompressing an $M_f$-bit frequency domain sample to a Q-bit frequency domain sample. The $M_f$-bit frequency domain sample being a compressed N-bit frequency domain sample obtained by the method according to the first aspect. The method for decompressing further comprises the following steps:

- obtaining the quantized number of bits $M_f$;
- representing the $M_f$-bit frequency domain sample as a Q-bit frequency domain sample.
  The number of bits N, $K_f$, $L_f$, Q and $M_f$ are positive integer numbers and N and Q are greater or equal to $M_f$. N and Q may further be identical.

According to a third aspect, the invention also relates to a compressor for compressing an N-bit frequency domain sample representing a single frequency tone in a frequency domain representation of a time domain symbol. The time domain symbol is to be sent or sent over a transport link from a first transceiver network component to a second transceiver network component. The N-bit frequency domain sample further represents $K_f$ bits of binary payload data as a constellation point of a constellation diagram. This compressor is then configured to obtain a reference bitloading profile comprising a maximum number of bits $L_f$ that may be loaded onto the single frequency tone, and to choose a quantized number of bits $M_f$ greater than or equal to $L_f$. The compressor further comprises a quantizer for quantizing the N-bit frequency domain sample to an $M_f$-bit frequency domain sample according to the quantized number of bits $M_f$. N, $K_f$, $L_f$ and $M_f$ are positive integer numbers and N is greater or equal to $M_f$.

According to a fourth aspect, the invention relates to a decompressor for decompressing an $M_f$-bit frequency domain sample. The decompressor is configured to obtain the $M_f$-bit frequency domain sample from a compressor according to the third aspect of the invention, to obtain the quantized number of bits $M_f$ and to represent the $M_f$-bit frequency domain sample as a Q-bit frequency domain sample. N, $K_f$, $L_f$, Q and $M_f$ are positive integer numbers; and N and Q are greater or equal to $M_f$.

## Brief Description of the Drawings

Fig. 1 illustrates a downlink and uplink signal processing chain according to the prior art;

Fig. 2 illustrates a system comprising a DPU and CPU each comprising a compressor and decompressor according to an embodiment of the invention;

Fig. 3 illustrates a further detail of the frequency domain downlink signal processing chain of Fig. 2 comprising a compressor according to an embodiment of the invention;

Fig. 4 illustrates a compressor according to an embodiment of the present invention;

Fig. 5 illustrates a graphical representation of bitloading profiles and reference bitloading profiles;

Fig. 6 illustrates a further embodiment of a compressor according to the invention;

Fig. 7 illustrates a decompressor according to embodiments of the present invention.

Fig. 8 illustrates the throughput on a backhaul transport link according to different scenarios.

## Detailed Description of Embodiment(s)

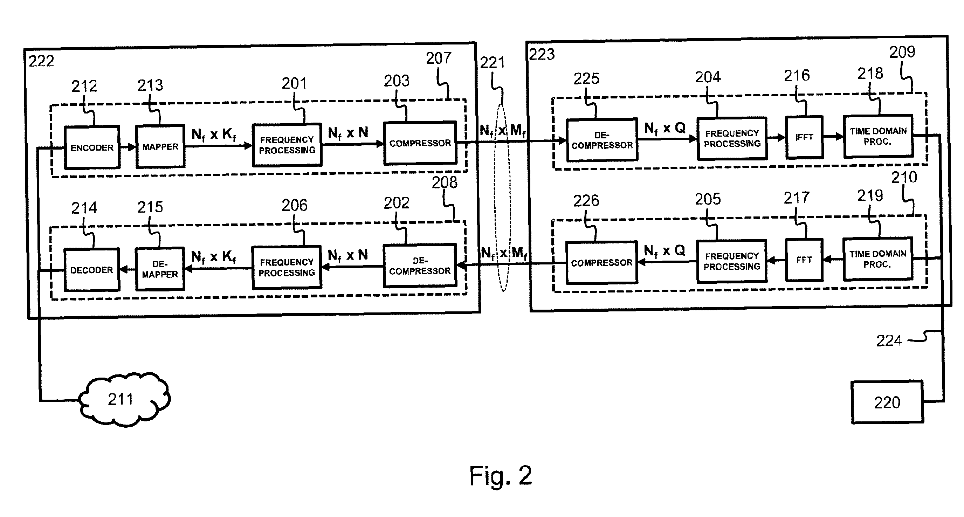

Fig.2 illustrates a system for the delivery of data from a data network 211 to an end user node 220 using a compressor 203 and decompressor 225 according to embodiments of the present invention. The end user node 220 is connected to a Distribution Point or more generally a Distributed Processing Unit or DPU 223 over a transport link 224. The DPU 223 may connect more than one end user node 220 over different transport links 224. The DPU on its turn is connected with a Central Processing Unit, further referred to as CPU 222, over a backhaul transport link 221. Several DPUs 223 may on their turn be connected to one single CPU 222. The CPU 222 is further connected to a data network 211. In order to deliver data from the data network 211 to the end user 220, the digital data is modulated in a downlink signal processing chain 207 and 223 onto time domain symbols and send over the transport link 224 to the end user node 220. In the end user node the time domain symbols are demodulated to retrieve the data received from the data network 211. The downlink signal processing chain is partially implemented in the CPU 222 as the block 207 and partially in the DPU as the block 209.

In a similar way there is an uplink signal processing chain in order to receive time domain symbols with modulated data from the end user node 220, process them partially in the DPU in block 210 and partially in the CPU in block 208 to get the demodulated data transmitted from the end user node 220 to the data network 211.

The transport link 224 may be a twisted pair telephone line connecting a modem located at an end user with a DPU located for example in a cabinet in the street. The signal processing chain may then for example use a Digital Subscriber Line (DSL) technique for the modulation of data onto this telephone line. Such a DSL technique may for example be Asymmetric digital subscriber line (ADSL), ADSL2, ADSL2+, VDSL, VDSL2 or the upcoming G.fast. These technology are sometimes grouped under the name xDSL.

The DPU and CPU may be located physically apart where the backhaul 221 is then a fast interconnect such as for example XG-PON interconnecting the DPU and CPU by an optic fibre cable. In this case the CPU may be located centrally at the network provider's facilities and serve as a Central Office (CO) whereas the DPU may be located in a cabinet closer to the end user's node serving as a Distribution Point (DP). At the distribution point the DPU may be powered by the end user node 220 over the transport link 224. Alternatively the DPU and CPU may be located in the same place where the DPU and CPU are implemented on different boards. The DPU and CPU may then for example be connected with each other by the backhaul or backplane of a server cabinet also allowing high data transfers between each other.

The downlink signal processing chain 207 in the CPU then comprises several processing blocks to implement the modulation chain. A first block 212 is an encoder block 212 for the encoding of binary payload data coming from higher layers. The encoder 212 may for example comprise a Read Solomon (RS) encoder and/or Trellis Coded Modulation (TCM) block depending on the used modulation technique. The chain then converts the binary data to a frequency domain representation by a mapping operation 213. After the mapping operation the data is mapped onto an $N_f$ amount of subcarriers or tones of a time domain symbol to be sent over the transport link 224. Each tone occurs at a different subcarrier frequency of the frequency domain representation of this time domain symbol. Each tone will then comprise $K_f$ data bits. The amount of data bits mapped on or assigned to a tone may differ for each tone and thus for each subcarrier frequency f as derived from a bitloading profile. Each tone is then assigned a frequency sample by the same amount of N bits in the signal processing chain. For example, in the upcoming processing chain according to the G.fast specification, one tone is typically represented by 12 bits, 6 bits for the In-phase component (I) and 6 bits for the Quadrature component (Q) making N equal to 12; in VDSL2 processing chains, N is typically 16 bits.

The processing of the data and thus the tones in the frequency domain is then split over the signal processing chain in block 201 in the CPU and block 204 in the DPU. The place where the split is made may be chosen. The more frequency domain processing is done in the CPU, the less processing power is needed in the DPU, but the higher the data throughput over the backhaul 221 will be as the raw data throughput increases with the signal processing chain.

In between the frequency domain processing, the frequency domain samples, i.e. the N-bits assigned to each tone, are send from the CPU and DPU over the backhaul 221. In order to limit the bandwidth needed by the backhaul 221, the N-bit frequency domain samples are compressed in a compressor block 203 to a smaller amount of bits $M_f$ which may be different for each tone and thus for each subcarrier frequency f.

In order to send the compressed frequency domain samples to the DPU 223, the samples may be further packaged as payload in packet specific to the backhaul transport link 221.

In order to further process the frequency domain samples in the frequency domain processing block 204, the $M_f$ bit frequency domain samples are first decompressed in a decompressor block 225 to the original N-bit samples or more generally to Q-bit samples where Q is at least equal or bigger than each $M_f$. The samples are then converted by an Inverse Fast Fourier Transform block 216 to the time domain to obtain a time domain symbol. In block 218 further time domain processing specific for the type of modulation may be further performed to obtain the time domain symbol that is sent over the transport link 224 to the end user node 220.

In a similar fashion, the DPU and CPU comprise an uplink signal processing chain 210 and 208 respectively. In the chain a symbols received by the DPU over the transport link from the end user node is converted to the frequency domain by a Fast Fourier Transform block 217. Then the signal processing in the frequency domain is divided over the DPU and CPU in respective processing block 205 and 206. Again the N-bit frequency domain samples are compressed in the compressor block 226 to $M_f$-bit samples and sent over the backhaul 221 to the CPU 222 where the samples are decompressed in the decompressor 202 into N-bit frequency domain samples. After the frequency domain processing 206, the data is demapped in a demapper 215 to obtain the binary payload data which may be further decoded in the decoder 214 and further data processing layers.

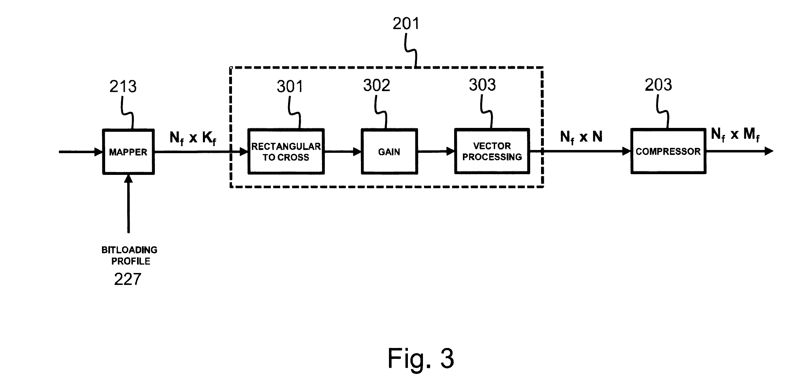

Fig. 3 illustrates functions that may be performed on the frequency domain samples after the mapper 213 but before the compressor 203. After the mapper 213 $K_f$ bits are mapped on each tone. In typical xDSL applications, the number of bits $K_f$ may vary per tone depending on the channel characteristics of the transport link 224. The number of bits $K_f$ loaded on each tone by the mapper 213 is then obtained from a bitloading profile specifying the amount of bits $K_f$ that may be loaded on each tone. Each tone and thus $K_f$ data bits are then represented by a frequency domain sample of N bits comprising an In phase (I) and Quadrature phase (Q) component. In xDSL, N may be 12 or 16 bits so 6 or 8 bits per component. The following operation is then a rectangular to cross operation 301 to transform the rectangular constellation diagram into a cross shaped constellation diagram, a gain operation 302 to adjust the dynamic range of the N-bit sample to the full amplitude of the tone and a Vector Processing operation 303. In vector processing, all the tones are multiplied with the inverse of the observed channel, i.e. the frequency domain equivalent of the transport link characteristics, in order to cancel out cross talk that would be added to the signal when transmitting it over the transport link. After these three operations 301, 302 and 303, the N-bit frequency domain samples for each tone are compressed by the compressor 203 before they are sent to the DPU 223.

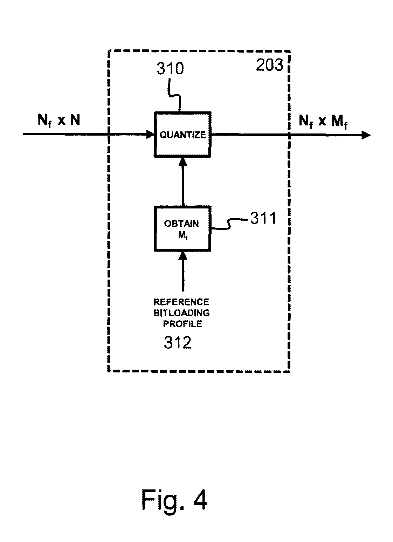

Fig. 4 illustrates an embodiment to carry out the compression of the N-bit frequency domain samples for all $N_f$ frequencies comprised in the time domain symbol to be sent over the transport link 224 to the end user node 220. First, a reference bitloading profile is obtained. The reference bitloading profile specifies the maximum number of bits $L_f$ that may be loaded on each tone and thus for a specific subcarrier frequency f when the time domain symbol is sent over a predetermined reference link, i.e. a reference transport link. Such a reference transport link may for example have a predetermined length and not have any stubs connected to the link. The reference bitloading profile may then be obtained by a simulation, theoretical characterization or experimental measuring of such a reference transport link.

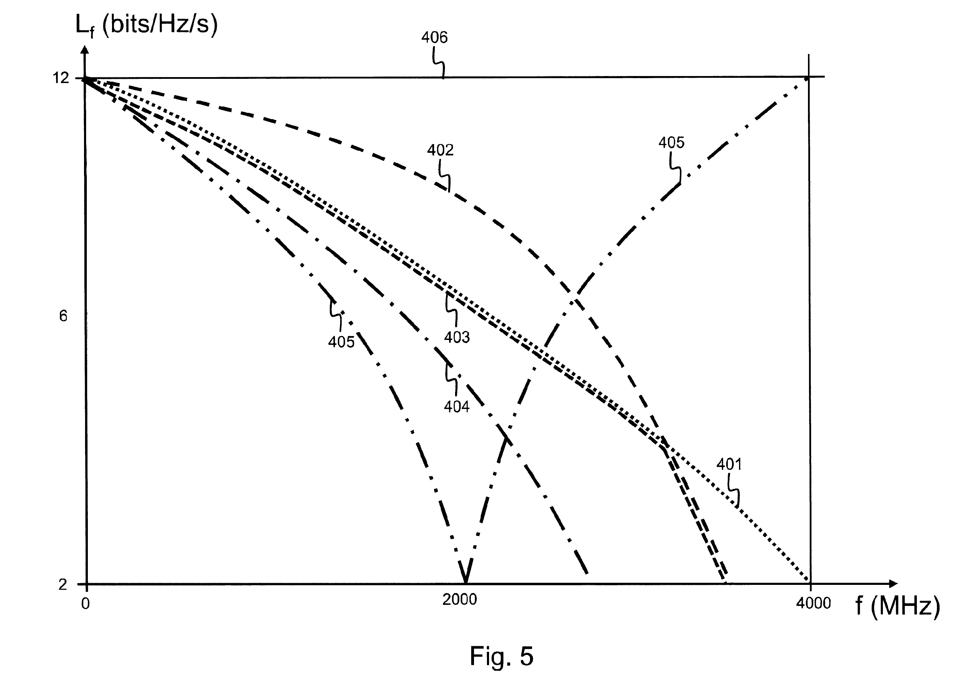

A graphical representation of such a bitloading profile is shown in Fig. 5 by the curve 401. The graph shows the spectral efficiency on the Y-axis and is expressed in bits per second per Hertz (bits/s/Hz) as a function of the frequency expressed in Megahertz (MHz) on the X-axis. This way, the maximum number of bits $L_f$ that may be loaded on a tone and thus to a specific subcarrier frequency can be derived from this graph.

Referring back to Fig. 4, the compressor then obtains in block 311 the maximum number of bits $L_f$ from the reference bitloading profile for each tone of the time domain symbol. To this number of bits $L_f$ an extra number of bits V are added to obtain the number of bits $M_f$ that may be used for compressing the $N_f$ bit sample. These extra bits V are added as a margin because the operations after the mapping, i.e. operations 301, 302 and 303 have caused a transformation of the symbol in the constellation diagram. Therefore, when the N bit sample would be compressed to a $L_f$ bit sample, a loss of information would occur. Experiments have shown that 1 or 2 bits as margin suffices to have no significant additional quantization noise, i.e. that the signal to noise ratio of the resulting time domain symbol remains substantially equal with V equal to 1 or 2.

In the quantizing block 310 all N bit samples or tones are then quantized to $M_f$ bits where $M_f$ is thus $L_f$ bits plus the margin V. The quantization itself may be performed by a right bit shifting operation on the N bit frequency domain sample by an amount of $N-M_f$ bits.

The gain in bandwidth by performing the compression as described above instead of sending the N-bit samples to the DPU can be expressed as follows:

$$1 - \frac{\sum_f L_f + V.N_f}{N.N_f + V.N_f} \qquad \text{(Eq. 1)}$$

where

$L_f$ is the maximum amount of bits that can be loaded on a tone with subcarrier frequency f according to the reference bitloading profile;

V is a margin in bits to compensate for quantization noise caused by frequency domain operations before the compressing, this value is preferable 1 or 2;

$N_f$ is the total number of tones and thus subcarrier frequencies;

N is the total number of bits used to represent the tone before compression and after mapping.

The reference bitloading profile 401 may be obtained at design-time, i.e. when installing the DPU or when connecting a DPU with an end user and thus installing a new transport link. Alternatively, the reference bitloading profile 401 may also be determined dynamically, i.e. at run-time where the profile may be updated from time to time. When using the reference bitloading profile 401, the gain in bandwidth on the backhaul link is the area above the curve 401 and under the horizontal line 406 defining a bitloading profile according to the state of the art where 12 bits are loaded on each tone. The area under the curve then indicates the upper bound bandwidth that may be achieved by using a compression using the reference bitloading profile.

An implication of the above type of compression is that during the mapping 213, not more bits $L_f$ may be loaded on a tone than specified in the reference bitloading profile as otherwise the compression will result in a loss of data. This situation may occur on a transport link 224 with a bitloading curve 402 as illustrated in Fig. 5. where less bits may be loaded in the higher subcarrier frequency tones, but more bits in the lower subcarrier frequency tones when compared with the reference profile 401. However, the total area under the curve 402 is bigger than the area under curve 401, therefore, the capacity of the transport link represented by curve 402 is greater than the upper bound capacity allowed by the bitloading profile. As a consequence, the mapper 213 will have to take curve 403 as the bitloading profile when loading the bits on tones according to the corresponding constellation diagrams. Only then no data will be lost in the compressor when compressing the data according to the reference bitloading profile 401. In another situation, when a transport link 224 is longer than the one according to the reference bitloading profile, the effective bitloading would for example look like curve 404 in Fig. 5. Therefore, no data is lost by the compressor 203 and the curve 404 may be used by the mapper 213.

In xDSL applications stubs may appear on the transport link. These stubs cause a change in the channel characteristics by a steep decrease in the bitloading profile towards a certain tone subfrequency. This is illustrated by curve 405 in Fig. 5. for the case where a stub is placed on the reference transport link. The actual area under the curve 405 is however the same as the area under the curve 401 and therefore, the throughput capacity of the link stays unchanged. However, although the throughput capacity is the same, the frequency characteristics of the reference profile 401 and the curve 405 is completely different. Therefore, when applying the reference profile 401 for compression on a line with a bitloading profile according to curve 405, the capacity will be underused as the during mapping the minumum of the two curves will be used.

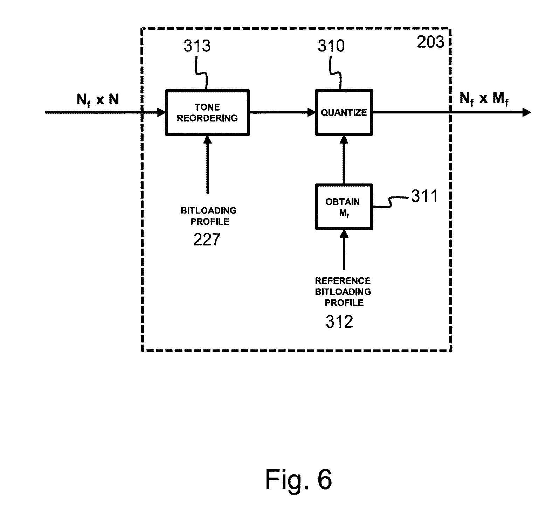

According to an embodiment of the compressor, this effect caused by stubs may be overcome by a tone reordering operation in the compressor. This is illustrated in Fig. 6 where an additional tone reordering operation 313 is added to the compressor 203. During this operation, the tones are assigned to a different subcarrier frequency according to the actual bitloading profile 227 such that the maximum number of bits $L_f$ that may be assigned to the tones show the same characteristic as the reference profile, i.e. a decrease in capacity towards the higher subcarrier frequencies. In a further step 310, the tones may then again be quantized according to the amount of the bits $M_f$ obtained from the reference bitloading profile for the updated subcarrier frequency of the tone.

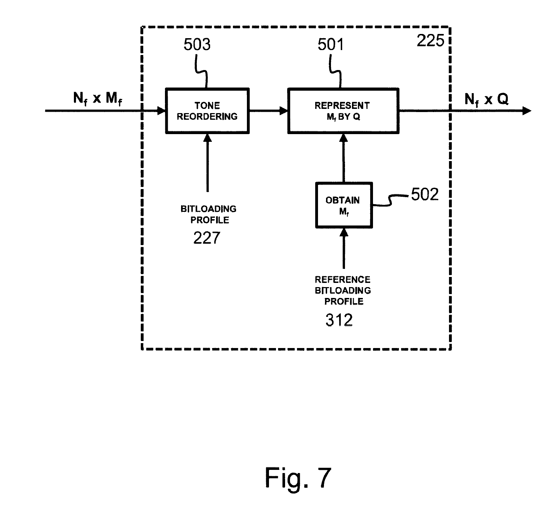

When compressed frequency domain samples represented by $M_f$ bits are received by the DPU 223, the $M_f$ bits are decompressed by the decompressor 225 of which an embodiment is shown in Fig. 7. In a first block 501 the received $M_f$ bit samples are represented by a Q-bit sample greater or equal than $M_f$ where Q is equal for all subcarrier frequencies and preferable equal to N bits as used for the representation of the samples in the CPU 222. The conversion of the $M_f$ bit sample to the Q bit sample may be done by a left bit shifting operation by an amount of bit positions Q minus $M_f$. To obtain the amount of bits $M_f$ used to represent the received tone, the same operation 502 is performed as in the block 311 of Fig. 6, i.e. the amount of bits $L_f$ is obtained from the reference bitloading profile and a margin to compensate the quantization error V is added to obtain $M_f$.

Optionally, a tone reordering operation is done before the conversion block 501 in order to reorder the tones back to their original position. The operation 501 is thus the exact reverse operation as performed in the tone reordering block 313 in the compressor 203.

For the compressor 226 and decompressor 202 in the uplink processing chains 210 and 208 in the respective DPU and CPU as illustrated by Fig. 2, an equivalent implementation of the compressor and decompressor as described above and shown in Fig. 4, 6 and 7 may be used. In this case the reference bitloading profile will have to be taken into account by the end user node 220 when mapping the binary data onto the tones to obtain a time domain symbol that is to be sent over the transport link 224 from the end user node 220 to the DPU 223.

The compressor 203 and thus also the decompressor 225 may also be placed in other positions of the downlink signal processing chain of Fig. 3. For example, none of the frequency domain signal processing may be performed in the CPU by placing the compressor 203 just after the mapping block 213 and perform all other operations 301, 302 and 303 in the DPU 223 after the decompression. As a result, no further margin V will have to be taken into account in the compressor 203, resulting in a higher compression gain at the expense that more processing is to be performed in the DPU 223. In this scenario the compression gain may be expressed as:

$$1 - \frac{\sum_f L_f}{N.N_f} \qquad \text{(Eq. 2)}$$

When the rectangular to cross shape transformation of the constellation diagram 301 is performed in the CPU and the rest of the frequency domain signal processing is performed at the DPU, then the compression gain is as follows:

$$1 - \frac{\sum_f 2\left\lceil \frac{L_f}{2} \right\rceil}{N.N_f} \qquad \text{(Eq. 3)}$$

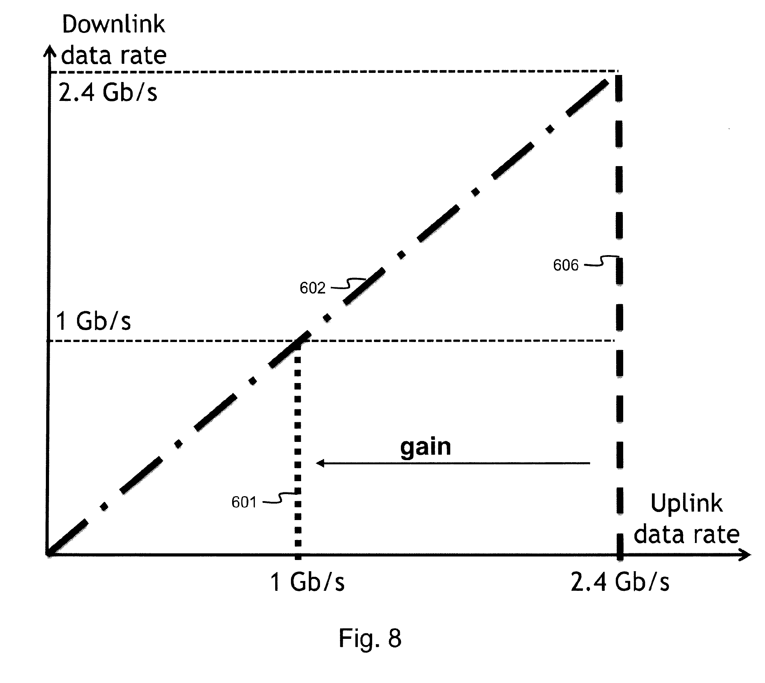

Fig. 8 illustrates the needed capacity in the backhaul link 221 for uplink and downlink for different scenarios, i.e. when the samples are transferred at different positions in the downlink signal processing chain. The illustrated capacities are in Gigabits per second (Gb/s) for a 212MHz bandplan according to the G.fast specification. The three curves relate to the following scenarios:

- The first curve 602 is reflecting the scenario where the signal processing is performed completely at the DPU according to the state of the art. There, the backhaul link carries the binary payload data and the backhaul link may thus be dimensioned according to the chosen downlink capacity offered to the end user. Hence, when offering a 1Gb/s throughput, the backhaul link will effectively carry 1 Gb/s of data.
- curve 606 is reflecting the scenario where uncompressed 12 bit frequency domain samples are transmitted over the backhaul link sharing the processing between the CPU and DPU. In this case, regardless of the chosen downlink capacity, the backhaul link will need to be dimensioned according to the highest throughput, i.e. 12 bits per tone or thus 2.4Gb/s in total.
- curve 601 illustrates the scenario where compressed frequency domain samples according to the invention are transmitted over the backhaul link. As the maximum capacity is limited by the reference loop bitloading profile, i.e. 1Gb/s, the capacity of the backhaul link may be dimensioned for 1 Gb/s.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description, and all changes which come within the meaning and range of equivalency of the claims are therefore intended to be embraced therein. In other words, it is contemplated to cover any and all modifications, variations or equivalents that fall within the scope of the basic underlying principles and whose essential attributes are claimed in this patent application. It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

**Claims**

1. A method for compressing an N-bit frequency domain sample assigned to a single frequency tone in a frequency domain representation of a time domain symbol; said time domain symbol to be sent or sent over a transport link (224) from a first transceiver network component (220, 223) to a second transceiver network component (220, 223); said N-bit frequency domain sample further representing $K_f$ bits of binary payload data as a constellation point of a constellation diagram; said method comprising the following steps:

   - obtaining a reference bitloading profile (401, 312) comprising a maximum number of bits $L_f$ that may be loaded onto said single frequency tone;
   - choosing (311) a quantized number of bits $M_f$ greater than or equal to $L_f$;
   - quantizing (310) said N-bit frequency domain sample to an $M_f$-bit frequency domain sample according to said quantized number of bits $M_f$;
   and wherein N, $K_f$, $L_f$ and $M_f$ are positive integer numbers and N is greater or equal to $M_f$.

2. The method according to claim 1 wherein said quantizing step (310) is only performed if $L_f$ is greater than $K_f$.

3. The method according to claim 1 wherein said single frequency tone is part of a set of $N_f$ tones in said frequency domain representation of said time domain symbol; and wherein said reference bitloading profile (401, 312) is indicative for a maximum number of bits that can be loaded on each tone of said set of $N_f$ tones when said time domain symbol is sent over a predetermined reference transport link.

4. The method according to claim 3 wherein said obtaining said bitloading profile comprises:

   - reordering (313) said set of $N_f$ tones, thereby assigning said N-bit frequency domain sample to an updated single frequency tone from said set of $N_f$ tones; said tone reordering being performed to compensate for a change in said maximum number of bits that can be loaded onto said single frequency tone by using said transport link instead of said predetermined reference transport link; and
   - selecting said maximum number of bits $L_f$ from said reference bitloading profile for said updated single frequency tone.

5. The method according to claim 1 wherein choosing said quantized number of bits $M_f$ comprises:

   - choosing a quantization margin V representing an extra number of bits V such that the sum of $L_f$ and V equals $M_f$; said quantization margin V being chosen such that quantization noise introduced by said quantizing is below overall system noise introduced on said frequency domain sample or time domain symbol.

6. A method for decompressing an $M_f$-bit frequency domain sample to a Q-bit frequency domain sample; said $M_f$-bit frequency domain sample being a compressed N-bit frequency domain sample; said N-bit frequency domain sample assigned to a single frequency tone in a frequency domain representation of a time domain symbol; said time domain symbol to be sent or sent over a transport link (224) from a first transceiver network component (220, 223) to a second transceiver network component (220, 223); said N-bit frequency domain sample further representing $K_f$ bits of binary payload data as a constellation point of a constellation diagram; said $M_f$-bit frequency domain sample being obtained from said N-bit frequency domain sample by:

   - obtaining a reference bitloading profile (401, 312) comprising a maximum number of bits $L_f$ that may be loaded onto said single frequency tone;
   - choosing (311) a quantized number of bits $M_f$ greater than or equal to $L_f$;
   - quantizing (310) said N-bit frequency domain sample to an $M_f$-bit frequency domain sample according to said quantized number of bits $M_f$;

   said method comprising the following steps:

- obtaining (502) said quantized number of bits $M_f$;
- representing (501) said $M_f$-bit frequency domain sample as a Q-bit frequency domain sample;

and wherein N, $K_f$, $L_f$, Q and $M_f$ are positive integer numbers; and N and Q are greater or equal to $M_f$.

7. The method according to claim 6 wherein N and Q are identical.

8. A compressor (203, 226) for compressing an N-bit frequency domain sample assigned to a single frequency tone in a frequency domain representation of a time domain symbol; said time domain symbol to be sent or sent over a transport link (224) from a first transceiver network component (220, 223) to a second transceiver network component (220, 223); said N-bit frequency domain sample further representing $K_f$ bits of binary payload data as a constellation point of a constellation diagram;
wherein said compressor is configured to obtain (311) a reference bitloading profile (401, 312) comprising a maximum number of bits $L_f$ that may be loaded onto said single frequency tone, and to choose (311) a quantized number of bits $M_f$ greater than or equal to $L_f$; and wherein said compressor further comprises a quantizer (310) for quantizing said N-bit frequency domain sample to an $M_f$-bit frequency domain sample according to said quantized number of bits $M_f$; and wherein N, $K_f$, $L_f$ and $M_f$ are positive integer numbers and N is greater or equal to $M_f$.

9. A decompressor (202, 225) for decompressing an $M_f$-bit frequency domain sample; wherein said decompressor is configure to obtain said $M_f$-bit frequency domain sample from a compressor according to claim 8; to obtain (502) said quantized number of bits $M_f$ and to represent (501) said $M_f$-bit frequency domain sample as a Q-bit frequency domain sample; and wherein N, $K_f$, $L_f$, Q and $M_f$ are positive integer numbers; and N and Q are greater or equal to $M_f$.

Fig. 1  (PRIOR ART)

Fig. 2

EP 2 860 894 A1

Fig. 3

$N_f \times N$  ·  310  ·  203  ·  QUANTIZE  ·  $N_f \times M_f$  ·  OBTAIN $M_f$ ·  311  ·  REFERENCE BITLOADING PROFILE  ·  312

Fig. 4

Fig. 5

Fig. 6

Fig. 7

Fig. 8

Europäisches
Patentamt

European
Patent Office

Office européen
des brevets

## EUROPEAN SEARCH REPORT

Application Number

EP 13 29 0241

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 02/062002 A1 (QUALCOMM INC [US]) 8 August 2002 (2002-08-08) * page 17, lines 3-28 * * page 11, lines 33-37 * ----- | 1-9 | INV. H04L1/00 H04L5/00 |
| X | WO 02/103926 A1 (QUALCOMM INC [US]) 27 December 2002 (2002-12-27) * paragraphs [1097] - [1099] * ----- | 1-9 | |
| A | "Approaches to adaptive Reed-Solomon coding for OFDM systems", VEHICULAR TECHNOLOGY CONFERENCE, 2005. VTC-2005-FALL. 2005 IEEE 62ND DALLAS, TX, USA 25-28 SEPT., 2005, PISCATAWAY, NJ, USA,IEEE, vol. 1, 28 September 2005 (2005-09-28), pages 453-457, XP010878511, ISBN: 978-0-7803-9152-9 * * section I, IIA and VI * ----- | 1-9 | |
| A | US 2006/013181 A1 (STOLPMAN VICTOR [US] ET AL) 19 January 2006 (2006-01-19) * paragraphs [0069], [0069], [0072] * ----- | 1-9 | TECHNICAL FIELDS SEARCHED (IPC) H04L |

The present search report has been drawn up for all claims

| Place of search | Date of completion of the search | Examiner |
|---|---|---|
| Munich | 12 December 2013 | Agudo Cortada, E |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

.......................................................................................
& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 13 29 0241

This annex lists the patent family members relating to the patent documents cited in the above-mentioned European search report.
The members are as contained in the European Patent Office EDP file on
The European Patent Office is in no way liable for these particulars which are merely given for the purpose of information.

12-12-2013

| Patent document cited in search report | | Publication date | Patent family member(s) | | | Publication date |
|---|---|---|---|---|---|---|
| WO 02062002 | A1 | 08-08-2002 | BR | 0206877 | A | 01-02-2005 |
| | | | CN | 1498478 | A | 19-05-2004 |
| | | | CN | 101005301 | A | 25-07-2007 |
| | | | EP | 1374466 | A1 | 02-01-2004 |
| | | | HK | 1063698 | A1 | 01-02-2008 |
| | | | JP | 2004535694 | A | 25-11-2004 |
| | | | TW | 586280 | B | 01-05-2004 |
| | | | US | 2003043928 | A1 | 06-03-2003 |
| | | | US | 2005276344 | A1 | 15-12-2005 |
| | | | WO | 02062002 | A1 | 08-08-2002 |
| WO 02103926 | A1 | 27-12-2002 | AT | 344553 | T | 15-11-2006 |
| | | | BR | 0210417 | A | 20-07-2004 |
| | | | CN | 1582540 | A | 16-02-2005 |
| | | | CN | 1937444 | A | 28-03-2007 |
| | | | DE | 60215811 | T2 | 13-09-2007 |
| | | | EP | 1400035 | A1 | 24-03-2004 |
| | | | HK | 1070761 | A1 | 28-09-2007 |
| | | | JP | 2004531976 | A | 14-10-2004 |
| | | | TW | 583854 | B | 11-04-2004 |
| | | | US | 2003112880 | A1 | 19-06-2003 |
| | | | US | 2006291582 | A1 | 28-12-2006 |
| | | | WO | 02103926 | A1 | 27-12-2002 |
| US 2006013181 | A1 | 19-01-2006 | CN | 101238694 | A | 06-08-2008 |
| | | | EP | 1897315 | A2 | 12-03-2008 |
| | | | JP | 2009500889 | A | 08-01-2009 |
| | | | KR | 20080021835 | A | 07-03-2008 |
| | | | US | 2006013181 | A1 | 19-01-2006 |
| | | | WO | 2007004019 | A2 | 11-01-2007 |

EPO FORM P0459

For more details about this annex : see Official Journal of the European Patent Office, No. 12/82